Europäisches Patentamt

European Patent Office

Office européen des brevets

(11) Veröffentlichungsnummer : **0 017 613**
**B1**

(12) **EUROPÄISCHE PATENTSCHRIFT**

(45) Veröffentlichungstag der Patentschrift :
09.03.83

(51) Int. Cl.³ : **B 65 H 61/00**

(21) Anmeldenummer : **80810067.1**

(22) Anmeldetag : **22.02.80**

(54) Verfahren zum Ermitteln eines zur Länge eines von einem Spinnkops oder von einer in wilder Wicklung bewickelten Garnspule über Kopf abgezogenen Fadens proportionalen Wertes sowie Vorrichtungen zum Durchführen des Verfahrens.

(30) Priorität : 26.03.79 CH 2763/79

(43) Veröffentlichungstag der Anmeldung :
15.10.80 Patentblatt 80/21

(45) Bekanntmachung des Hinweises auf die Patenterteilung : 09.03.83 Patentblatt 83/10

(84) Benannte Vertragsstaaten :
BE DE FR GB IT

(56) Entgegenhaltungen :
CH A 473 378
DE B 1 273 861
JP A 50 037 301

(73) Patentinhaber : **Mayer, Stephan, Dr.**
**Schilfweg 18**
**CH-6402 Merlischachen (CH)**

(72) Erfinder : **Mayer, Stephan, Dr.**
**Schilfweg 18**
**CH-6402 Merlischachen (CH)**

(74) Vertreter : **Schaad, Walter F. et ai**
**Patentanwälte Schaad Balass Sandmeier Alder**
**Dufourstrasse 101**
**CH-8034 Zürich (CH)**

## 0 017 613

Verfahren zum Ermitteln eines zur Länge eines von einem Spinnkops oder von einer in wilder
Wicklung bewickelten Garnspule über Kopf abgezogenen Fadens proportionalen
Wertes sowie Vorrichtungen zum Durchführen des Verfahrens

Die Erfindung betrifft ein Verfahren zum Ermitteln eines zur Länge eines von einem Spinnkops oder von einer in wilder Wicklung bewickelten Garnspule über Kopf abgezogenen Fadens proportionalen Wertes, insbesondere beim Umspulen des Fadens auf einen weiteren Garnträger. Die Erfindung betrifft ebenfalls zwei Vorrichtungen zur Durchführung dieses Verfahrens.

Das Verfahren ist auf alle Schleifspulen anwendbar, bei denen die Fadenlänge von aufeinander folgenden Wicklungslagen konstant ist. Dies ist z. B. bei sogenannten « Präzisionswicklungen » nicht der Fall.

Vor der Weiterverarbeitung wird beispielsweise das von der Spinneinheit in Form eines Spinnkops anfallende Garn in der Regel zu einem anderen, dem nachfolgenden Verarbeitungsschritt angepassten Wickelkörper (z. B. zu einer Kreuzspule) umgespult, wobei im Zuge des Umspulens auch eine Verbesserung der Garnqualität, beispielsweise durch einen Garnreiniger, herbeigeführt wird. Werden die entstehenden Wickelkörper im nachfolgenden Verarbeitungsschritt parallel verarbeitet, so führen ungleiche Fadenlängen auf diesen Wickelkörpern zu lästigen und die Produktion hemmenden Erscheinungen, z. B. zu vorzeitigen Stillständen und zum Mehraufwand zum Aufbereiten von Wickelresten.

Es sind daher schon einige Verfahren und Vorrichtungen vorgeschlagen worden, um die Länge des Fadens auf den entstehenden Wickelkörpern zu messen, mit dem Bestreben, diese Länge für alle entstehenden Wickelkörper möglichst konstant zu halten.

Bekannt ist z. B. aus der CH-A 588 067 ein Verfahren, bei dem aus dem Durchmesser einer an ihrer Achs direkt angetriebenen, den abgezogenen Faden aufnehmenden Kreuzspule und aus der Anzahl der von dieser Kreuzspule ausgeführten Umdrehungen mit einem nicht unerheblichen Aufwand an elektronischen Hilfmitteln die Länge des aufgewickelten Fadens errechnet wird. Der mit diesem Vorgehen errechnete Wert ist kaum ausreichend genau, weil der Zusammenhang zwischen Durchmesser und Wickeldichte auf der entstehenden Kreuzspule weitgehend unberücksichtigt bleibt.

Bei anderen, vorbekannten Einrichtungen (z. B. CH-A 597 589 und 568 233) wird aus der Anzahl der Umdrehungen entweder der den zu bewickelnden Wickelkörper mit konstanter Umfangsgeschwindigkeit antreibenden Reibwalze oder der den Faden abziehenden Abzugswalzen die Länge des abgezogenen Fadens hergeleitet. Dieses Vorgehen lässt den unvermeidlichen und unregelmässigen Schlupf zwischen Reibwalze und Wicklungskörper bzw. zwischen Abzugswalzen und abgezogenem Faden unberücksichtigt, so dass die « gemessene Länge » in der Regel grösser als die « wahre Länge » des abgezogenen Fadens ist.

Schliesslich lässt man in der Einrichtung gemäss CH-A 473 378 den abgezogenen Faden reibschlüssig eine Messrolle antreiben und schliesst dann aufgrund der Anzahl Umdrehungen der Messrolle auf die Länge des über die Messrolle gezogenen Fadens. Auch hier bleibt der unvermeidliche und unregelmässige Schlupf zwischen Faden und Messrolle unberücksichtigt.

Die Erfindung bezweckt nun die Schaffung eines Verfahrens der eingangs genannten Art, bei dem die Fehlerquellen der zuvor genannten, bekannten Vorschläge umgangen werden, und dass eine auf Bruchteile eines Prozentes genaue Berechnung der Länge des von einem Spinnkops bzw. von einer Garnspule über Kopf abgezogenen Fadens erlaubt.

Die Erfindung stützt sich dabei auf Erkenntnisse im Zusammenhang mit der Entstehung des Spinnkopses bzw. der Garnspule, von dem bzw. von der der Faden abzuziehen ist.

An einer Spinnmaschine werden alle Spinnstellen von einem gemeinsamen Hauptantrieb angetrieben. Die Zuführgeschwindigkeit der Garnlieferung (Streckwerk) sowie der Antrieb (Herzexzenter) für die Hübe der dem Spinnkops zugeordneten Fadenführer stehen in einem festen Verhältnis zueinander. Dieses Verhältnis bestimmt die wahre Fadenlänge pro Doppelhub des Fadenführers, d. h. für zwei aufeinander folgende Wicklungslagen auf dem entstehenden Spinnkops und ist für alle Spinnstellen der gleichen Spinnmaschinen gleich.

Dasselbe trifft allgemein für Wickelkörper zu, bei deren Entstehung ein festes Verhältnis zwischen der Garnlieferung pro Zeiteinheit und der Anzahl Doppelhübe der Fadenführer pro Zeiteinheit existiert. Dies trifft beispielsweise auch für « wilde Wicklungen » zu, bei denen der entstehende Wickelkörper umfangsseitig angetrieben ist und der Hin- und Her-Antriebsbewegung der Fadenführer (changieren) in einem festen Verhältnis zu dem Antrieb des entstehenden Wickelkörpers steht.

Daraus ergibt sich, dass für alle an einer Spinnmaschine entstehenden Spinnkopse bzw. für alle auf einer bestimmten Wickelmaschine entstandenen wilden Wicklungen die Länge des Fadens aufeinander folgender Wicklungslagen konstant ist.

Gestützt auf diese Erkenntnis wird nun zum Ermitteln eines zur Länge eines von einem Spinnkops oder von einer in wilder Wicklung bewickelten Garnspule über Kopf abgezogenen Fadens proportionalen Wertes gemäss der Erfindung vorgeschlagen, dass ein nach Massgabe der Hubbewegung des Fadenablösepunktes am Kops bzw. an der Garnspule periodisch sich veränderndes Signal erzeugt wird, und dass die Perioden der Grundfrequenz dieses Signals gezählt werden.

Dabei kann, wie sich noch zeigen wird, das periodische Signal aus der Fadenabzugskraft, die unmittelbar von der Hubbewegung des Fadenablösepunktes am Spinnkops abhängt und sich daher auch periodisch ändert, hergeleitet werden, oder aber auch aus der Umlaufzahl des Ballons des abgezogenen Fadens, welche Umlaufzahl ebenfalls von der Hubbewegung des Fadenablösepunktes am Kops bzw. an der Garnspule abhängig ist.

Es genügt somit, dass für eine bestimmte Fadenqualität und z. B. für von derselben Spinnmaschine stammende Spinnkopse die Fadenlänge zweier aufeinander folgender Wicklungslagen, d. h. die Fadenlänge pro Doppelhub gemessen wird und dann mit der Anzahl der gezählten Perioden des periodisch sich verändernden Signals multipliziert wird. Andererseits kann es bei einer wilden Wicklung genügen, die Fadenlänge einer Wicklungslage zu messen und die gemessene Länge mit zwei und mit der Anzahl der gezählten Perioden zu multiplizieren.

Zur weiteren Erläuterung der Erfindung sei auf die nachstehende, rein beispielsweise Beschreibung anhand der Zeichnung verwiesen. Es zeigt :

Figur 1 eine schematische Darstellung einer zur Durchführung des Verfahrens geeigneten Vorrichtung,

Figuren 2a und 2b vereinfachte graphische Darstellungen des zeitlichen Verlaufs der Fadenabzugskraft einerseits und der Umlaufzahl des Fadenablösepunktes im Zuge des Abziehens des Fadens von einem Spinnkops, und

Figur 3 Oszillogramme der bei der Anordnung gemäss Fig. 1 an zwei verschiedenen Stellen entstehenden Signale.

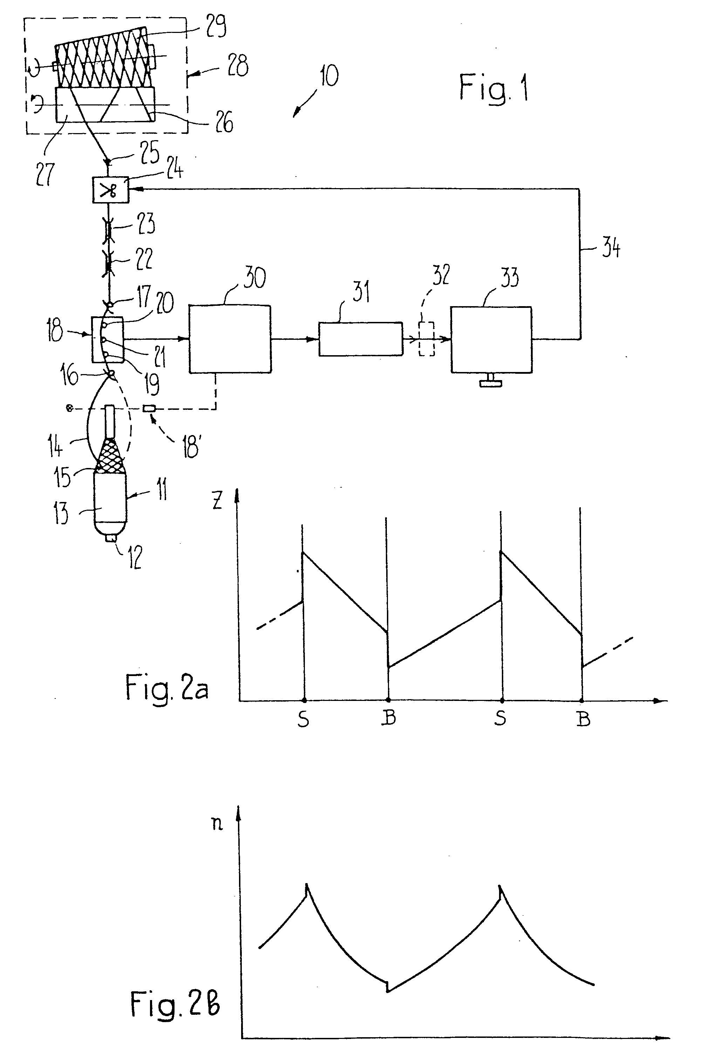

Bei der in Fig. 1 schematisch dargestellten Vorrichtung 10 erkennt man einen Spinnkops 11, der einen auf einer Hülse 12 gewickelten Wickelkörper 13 trägt. Von diesem Wickelkörper 13 wird ein Faden 14 abgezogen. Dabei verlässt der Faden 14 den Wickelkörper 13 an einem Fadenablösepunkt 15, der während des Abziehens um den Wickelkörper 13 umläuft un nach Massgabe der Steigung der Wicklungslagen auf dem Wickelkörper 13 sich auf und ab bewegt. Die Wicklungslagen im Wickelkörper 13 definieren einen Kegelstumpf. Der abgezogene Faden 14 ist durch zwei ortsfest und im wesentlichen koaxial zum Spinnkops 11 angeordnete Fadenführer 16, 17 geführt. Zwischen den beiden Fadenführern 16, 17 ist der Faden 14 durch einen herkömmlichen Messkopf 18 zur Messung der Fadenzugkraft geführt. Dieser Messkopf 18 weist einen zwischen zwei unbeweglichen Führungsstiften 19, 20 angeordneten und an einen Wandler befestigten Taststift 21 auf. Der dem Taststift 21 zugeordnete, nicht dargestellte Wandler (es kann ein piezoelektrischer oder ein DMS-Wandler sein) liefert ein elektrisches Signal in Abhängigkeit des Masses, um das der Taststift 21 durch den Faden 14 gegen die gerade, die Führungsstifte 19, 20 verbindende Linie gedrängt wird. Dieses Signal ist somit u. a. charakteristisch für die Fadenzugkraft.

Der den Fadenführer 17 verlassende Faden ist durch zwei Fadenbremsen 22, 23 sowie durch eine nur schematisch angegebene, elektrisch betätigte Schneidvorrichtung 24 geführt, bevor er über einen weiteren Fadenführer 25 beispielsweise die mit einer kehrwendellinienförmigen Führungsnut 26 versehene Antriebs-Reibwalze 27 einer herkömmlichen Spulmaschine 28 erreicht, wo er zu einem neuen Wickelkörper, z. B. zu einer konischen, von der Reibwalze 27 angetriebenen Kreuzspule 29 umgespult wird.

Der Messkopf 18 ist an einen Verstärker 30 angeschlossen, dem ein Tiefpassfilter 31 nachgeschaltet ist. Der Tiefpassfilter 31 ist gegebenenfalls über einen Impulsformer 32, z. B. in Form eines Spannungskomparators oder monostabilen Multivibrators, an einen Vorwahlzähler 33 angeschlossen. Dieser Zähler 33 zählt die Perioden der Grundfrequenz des vom Messkopf 18 erzeugten Signales. Der vom Zähler erfasste Zählwert ist somit, wie sich noch zeigen wird, direkt proportional zur Länge des durch den Messkopf 18 hindurch gelaufenen Fadens. Der Zähler 33 kann über eine Ausgangsleitung 34 ein Ausgangssignal abgeben, sobald der Zählwert den am Zähler 33 voreingestellten Wert erreicht hat. Dieses Ausgangssignal kann wiederum zur Steuerung weiterer Vorrichtungen herangezogen werden, wie hier zur Betätigung der Schneidvorrichtung 24.

Es sei nun anhand der Fig. 2a kurz dargelegt, weshalb das vom Messkopf 18 erzeugte Signal, d. h. die Fadenabzugskraft mit der Lage des Fadenablösepunktes 15 einhergehende Schwankungen aufweist.

Die Wickellagen auf einem Spinnkops haben — wie bereits erwähnt — die Form eines Kegelstumpfes. Wird der Faden 14 von Kops 11 abgezogen, wandert der Ablösepunkt 15 (abgesehen von seiner Umlaufbewegung) zwischen der Basis und der Spitze dieses Kegelstumpfes hin und her. Bei im wesentlichen konstanter Fadenabzugsgeschwindigkeit läuft der Fadenablösepunkt 15 an der Spitze des Kegelstumpfes schneller um als an dessen Basis. Bei der Bewegung des Ablösepunktes 15 zur Spitze des Kegelstumpfes hin fällt mehr Faden an, während bei der Bewegung zur Basis hin durch schnelleren Umlauf des Ablösepunktes 15 mehr Faden freigegeben werden muss. Durch den Umlauf des Fadenablösepunktes 15 ist der abgezogene Faden einer Fliehkraft ausgesetzt, d. h. der Faden beschreibt den sogenannten Ballon. Die auf den abgezogenen Faden wirkende Fliehkraft ist proportional zum Quadrat der Ballondrehzahl, und diese entspricht der Umlaufzahl des Ablösepunktes 15. Die Zugkraft, unter der der Faden 14 beim Durchlauf durch den Messkopf 18 steht, ist abhängig von der Fliehkraft. Berücksichtigt man nur diese Gegebenheiten, variiert somit die Zugkraft des Fadens gemäss in Fig. 2a dargestellter Kurve. Wenn der Ablösepunkt 15 sich der Spitze des Kegelstumpfes nähert, erhöht sich die Zugkraft Z allmählich infolge zunehmender Umlaufzahl. Hat der Ablösepunkt 15 die Spitze des Kegelstumpfes erreicht (Punkte S in Fig. 2a), nimmt die Zugkraft aber sprungartig zu, weil die Ballondrehzahl unmittelbar bei Beginn der Bewegung des Ablösepunktes zur Basis des Kegelstumpfes hin plötzlich

**0 017 613**

zunimmt. Während dieser Bewegung zur Basis hin vermindert sich die Zugkraft wieder allmählich. Beim Erreichen der Basis des Kegelstumpfes (Punkte B in Fig. 2a) nimmt die Ballondrehzahl und mithin auch die Zugkraft sprungartig ab, um sodann allmählich wieder zuzunehmen. Die Zugkraft im Faden ist somit streng periodischen Schwankungen unterworfen, die mit der Bewegung des Ablösepunktes 15 am Kops 11 einhergehen.

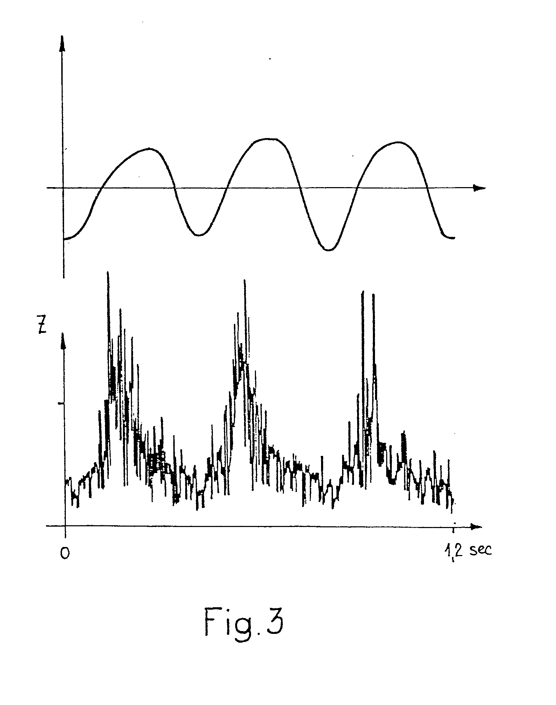

Natürlich erfasst der Messkopf 18 auch alle Unregelmässigkeiten an der Oberfläche des Fadens, so dass das vom Messkopf 18 gelieferte Signal noch höher frequente Anteile aufweist. In Wirklichkeit zeigt das in Fig. 3 unten wiedergegebene Oszillogramm des am Ausgang des Verstärkers 30 abgegriffenen Signals deutlich eine Grundfrequenz, der zahlreiche höherfrequente Komponenten überlagert sind. Diese höherfrequenten Komponenten werden durch das Tiefpassfilter 31, das beispielsweise auf eine Frequenz zwischen 5 und 10 Hz eingestellt ist, ausgesiebt, so dass an dessen Ausgang nur noch ein Signal erscheint (Fig. 3 oben), das im wesentlichen die genannte Grundfrequenz darstellt.

Zur Herleitung des periodisch mit der Bewegung des Ablösepunkte 15 einhergehenden Signals kann anstelle der Zugkraft Z auch die Ballondrehzahl n, d. h. die Umlaufzahl des Ablösepunkte 15 selbst herangezogen werden. Aus den bisherigen Darlegungen folgt, dass diese Drehzahl n sich etwa wie in Fig. 2b dargestellt periodisch ändert (weder Fig. 2a noch Fig. 2b erheben Anspruch auf Massstäblichkeit). Diese Dreh- oder Umlaufszahl kann, wie in Fig. 1 schematisch dargestellt, mittels einer Lichtschranke 18' berührungslos erfasst werden, das Signal der Lichtschranke kann sodann z. B. über einen nicht dargestellten Messwertumformer, der die momentane Unterbrechungsfrequenz in eine entsprechende Spannung umwandelt, dem Verstärker 30 zugeführt werden.

Schliesslich sei anhand der folgenden beiden, in der Praxis durchgeführten Beispiele auf die mit dem beschriebenen Verfahren erzielbare Genauigkeit der Längenmessung hingewiesen, wobei unter « gemessene Länge » die nach dem Verfahren ermittelte, und unter « wahren Länge » die tatsächliche Länge des von dem entsprechenden Kops abgezogenen Fadens zu verstehen ist.

### Beispiel 1
Baumwollfaden, Feinheit 50 tex (g/1 000 m) Abzugsgeschwindigkeit 700 m/min

| Kops Nr. | Gemessene Länge (m) | Wahre Länge (m) | Längendifferenz in (m) | (%) |
|---|---|---|---|---|
| 1 | 4'929 | 4'933 | − 4 | 0,08 |
| 2 | 4'406 | 4'402 | + 4 | 0,09 |
| 3 | 4'697 | 4'698 | − 1 | 0,02 |
| 4 | 4'938 | 4'942 | − 4 | 0,08 |
| 5 | 4'838 | 4'846 | − 8 | 0,16 |
| Mittelwerte | 4'761,6 | 4'764,2 | − 2,6 | 0,055 |

| Standardabweichung | der Längendifferenz : 4,4 m ; | oder | Variationskoeffizient : 0,09 % |
|---|---|---|---|

### Beispiel 2
Baumwollfaden, Feinheit 20 tex Abzugsgeschwindigkeit 800 m/min

| Kops Nr. | Gemessene Länge (m) | Wahre Länge (m) | Längendifferenz in (m) | (%) |
|---|---|---|---|---|
| 1 | 6'473 | 6'428 | + 45 | 0,7 |
| 2 | 5'667 | 5'644 | + 23 | 0,41 |
| 3 | 6'431 | 6'411 | + 20 | 0,31 |
| 4 | 6'466 | 6'436 | + 30 | 0,47 |
| 5 | 6'481 | 6'461 | + 20 | 0,31 |
| Mittelwerte | 6'303,6 | 6'276 | + 27,6 | 0,44 |

| Standardabweichung | der Längendifferenz : 10,6 m | oder | Variationskoeffizient : 0,17 % |
|---|---|---|---|

4

Geht man davon aus, dass in der Praxis mehrere Kopse zu einer einzigen Kreuzspule umgespult werden, reduziert sich nach dem statistischen Mittelwertsatz der Variationskoeffizient weiter. Wenn alle fünf Kopse der Beispiele 1 und 2 je zu einer einzigen Kreuzspule umgespult würden, ergäbe sich für das Beispiel 1 ein Variationskoeffizient von $0,09\sqrt{5} = 0,04$ %, und für das Beispiel 2 einen solchen von $0,17\sqrt{5} = 0,076$ %.

## Ansprüche

1. Verfahren zum Ermitteln eines zur Länge eines von einem Spinnkops (11) oder von einer in wilder Wicklung bewickelten Garnspule über Kopf abgezogenen Fadens proportionalen Wertes, insbesondere beim Umspulen des Fadens auf einen weiteren Garnträger (29), dadurch gekennzeichnet, dass ein nach Massgabe der Hubbewegung des Fadenablösepunktes am Kops (11) bzw. an der Garnspule periodisch sich veränderndes Signal erzeugt wird und dass die Perioden der Grundfrequenz dieses Signals gezählt werden.

2. Verfahren nach Anspruch 1, dadurch gekennzeichnet, dass das periodisch sich verändernde Signal aus der im Fadenlauf in Abhängigkeit der Hubbewegung des Fadenablösepunktes am Kops (11) bzw. an der Garnspule periodisch sich verändernden Fadenzugkraft abgeleitet wird.

3. Verfahren nach Anspruch 1, dadurch gekennzeichnet, dass das periodisch sich verändernde Signal aus der in Abhängigkeit der Hubbewegung des Fadenablösepunktes am Kops (11) bzw. an der Garnspule periodisch sich verändernden Umlaufzahl des Ballons des abgezogenen Fadens (14) durch Abtastung des Fadendurchganges im Bereiche des Ballons abgeleitet wird.

4. Verfahren nach Anspruch 3, dadurch gekennzeichnet, dass der Fadendurchgang optisch abgetastet wird.

5. Verfahren nach einem der Ansprüche 1 bis 4, dadurch gekennzeichnet, dass ein Ausgangssignal erzeugt wird, wenn die Anzahl der gezählten Perioden einen voreingestellten Wert erreicht.

6. Verfahren nach einem der Ansprüche 1 bis 5, bei dem der Faden von dem Spinnkops (11) bzw. von der Garnspule auf einen weiteren Garnträger (29), z. B. eine Kreuzspule umgespult wird, dadurch gekennzeichnet, dass der vom Kops bzw. von der Garnspule abgezogene und dem weiteren Garnträger zugeführte Faden durchschnitten wird, sobald die Anzahl der gezählten Perioden einen vorbestimmten Wert erreicht hat.

7. Vorrichtung zur Durchführung des Verfahrens nach Anspruch 2, dadurch gekennzeichnet, dass im Anschluss an den Kops (11) bzw. an die Garnspule ein ortsfester, ein elektrisches Signal abgebender Fadenzugkraft-Messkopf (18) angeordnet ist, der über ein Tiefpassfilter (31) an einen Vorwahlzähler (33) gekoppelt ist.

8. Vorrichtung zur Durchführung des Verfahrens nach Anspruch 3, dadurch gekennzeichnet, dass im Anschluss an den Kops (11) bzw. an die Garnspule ein ortsfester, photoelektrischer Signalgeber (18') angeordnet ist, der durch optische Abtastung des Fadendurchganges die Umlaufzahl des Ballons des vom Kops (11) bzw. der Garnspule abgezogenen Fadens erfasst und der über einen Messwertumformer und über ein Tiefpassfilter (31) an einen Vorwahlzähler gekoppelt ist.

9. Vorrichtung nach Anspruch 7 oder 8, dadurch gekennzeichnet, dass dem Tiefpassfilter (31) ein Signalformer (32), z. B. ein Spannungskomparator oder ein monostabiler Multivibrator, nachgeschaltet ist.

## Claims

1. A method for determining a value proportional to the length of a thread drawn off overhead from a spinning cop (11) or from a random cross wound bobbin, particularly by unwinding the thread on to a further yarn holder (29), characterized in that a signal is produced which is periodically varying in accordance to the axially reciprocating movement of the thread detachment point at the cop (11) or at the bobbin, respectively and that the periods of the fundamental frequency of this signal are counted.

2. A method according to claim 1, characterized in that the periodically varying signal is derived from the thread tension force which varies periodically in accordance with the axially reciprocating movement of the thread detachment point at the cop (11) or at the bobbin, respectively.

3. A method according to claim 1, characterized in that the periodically varying signal is derived from the number of revolutions of the balloon of the drawn off thread (14), this number of revolutions varying periodically in accordance with the axially reciprocating movement of the thread detachment point at the cop (11) or at the bobbin, respectively, by scanning the passage of the thread in the area of the balloon.

4. A method according to claim 3, characterized in that the passage of the thread is scanned optically.

5. A method according to any one of claims 1 to 4, characterized in that an output signal is produced when the number of periods counted reaches a predetermined value.

6. A method according to any one of claims 1 to 5, in which the thread is unwound from the spinning cop (11) or from the bobbin, respectively, onto a further yarn carrier (29), for example a cross wound spool, characterized in that the thread drawn off from the cop or from the random cross wound bobbin, respectively and fed on to the further yarn carrier is cut through as soon as the number of periods counted has reached a predetermined value.

7. A device for carrying out the method according to claim 2, characterized in that a thread tension measuring head (18) emitting an electrical signal is fixedly arranged near the cop (11) or the bobbin, respectively, this measuring head being connected to a preselection counter (33) by means of a low-pass filter (31).

8. A device for carrying out the method according to claim 3, characterized in that a fixed photoelectric signal transmitter (18') is arranged near the cop (11) or the bobbin, respectively, this signal transmitter determining the number of revolutions of the balloon of the thread drawn off from the cop (11) or the bobbin, respectively, by means of optical scanning the passage of the thread, and being connected to a preselection counter via a value transformer and a low-pass filter (31).

9. A device according to claim 7 or 8, characterized in that a signal former (32), for example a voltage comparator or a single shot multivibrator, is connected to the output of the low-pass filter (31).

**Revendications**

1. Procédé pour obtenir une grandeur proportionnelle à la longueur d'un fil dévidé à la défilée d'un kops de filature (11) ou d'une bobine de fil bobinée sans ordre, en particulier lors du renvidage du fil sur un autre support de fil (29), caractérisé en ce qu'on produit un signal qui varie périodiquement en fonction du mouvement de translation du point de séparation du fil sur le kops ou la bobine de fil, et on compte les périodes de la fréquence fondamentale de ce signal.

2. Procédé suivant la revendication 1, caractérisé en ce que le signal qui varie périodiquement est déduit de la force de traction du fil qui varie périodiquement sur le trajet du fil en fonction du mouvement de translation du point de séparation du fil sur le kops (11) ou sur la bobine de fil.

3. Procédé suivant la revendication 1, caractérisé en ce que le signal qui varie périodiquement est déduit du nombre de tours du ballon du fil dévidé (14), qui varie périodiquement en fonction du mouvement de translation du point de séparation du fil sur le kops (11) ou sur la bobine de fil, par captage du passage du fil dans la région du ballon.

4. Procédé suivant la revendication 3, caractérisé en ce que le passage du fil est palpé optiquement.

5. Procédé suivant l'une des revendications 1 à 4, caractérisé en ce qu'un signal de sortie est produit lorsque le nombre des périodes comptées atteint une valeur préréglée.

6. Procédé suivant l'une des revendications 1 à 5, dans lequel le fil est renvidé du kops de filature (11) ou de la bobine de fil sur un autre support de fil (29), par exemple, une bobine à renvidage croisé, caractérisé en ce que le fil dévidé du kops ou de la bobine de fil et acheminé à l'autre support de fil est coupé dès que le nombre des périodes comptées a atteint une valeur prédéterminée.

7. Dispositif pour la mise en œuvre du procédé suivant la revendication 2, caractérisé en ce que, à la suite du kops (11) ou de la bobine de fil, est disposée une tête fixe (18) de mesure de la force de tirage du fil émettant un signal électrique, qui couplé par l'intermédiaire d'un filtre passe-bas (31) à un compteur à présélection (33).

8. Dispositif pour la mise en œuvre du procédé suivant la revendication 3, caractérisé en ce qu'à la suite du kops (11) ou de la bobine de fil est disposé un générateur de signaux photoélectrique fixe (18') qui capte la vitesse de rotation du ballon du fil dévidé du kops (11) par palpage optique du passage du fil et est couplé à un compteur à présélection par l'intermédiaire d'un transformateur de valeurs de mesure et d'un filtre passe-bas (31).

9. Dispositif suivant la revendication 7 ou 8, caractérisé en ce qu'en aval du filtre passe-bas (31), est connecté un conformateur de signaux (32), par exemple un comparateur de tensions ou un multivibrateur monostable.

Fig. 1

Fig. 2a

Fig. 2b

Fig.3

2